# EUROPEAN PATENT SPECIFICATION

(11) **EP 1 597 974 B1**
(45) Date of publication and mention of the grant of the patent: **12.11.2008**
(21) Application number: 04011752.5
(22) Date of filing: 18.05.2004
(51) Int. Cl.: A23G 9/00, A23G 9/16, A23G 9/08, A23G 9/28

(54) **Frozen confection and method of manufacture**
Gefrorene Süßware und Herstellmethode
Confiserie congelée et procédé de fabrication

(43) Date of publication of application: 23.11.2005
(73) Proprietor: Nestec S.A., 1800 Vevey (CH)
(72) Inventor: Harlaux, Ginette, 60000 Beauvais (FR); Bertrand, Francis Victor, 60510 Laversines (FR); Delande, Bruno Sadi Henri, 60690 Marseille en Beauvaisis (FR); Beucher, Loic, 60650 Villembray (FR)
(74) Representative: Elleby, Gudrun

(56) References cited:
- WO-A-03/090549
- US-A- 2 570 031
- US-A- 4 542 028
- US-A- 5 000 969
- US-B1- 6 284 294

## Description

### Field of the invention

The present invention relates to a frozen confection , particularly to a frozen stick bar manufactured by moulding.

### Background of the invention

Small frozen confectionery sticks bars are manufactured on an industrial scale by means of moulding or by means of extrusion.

When extrusion is employed, a sausage shape of plastic consistency, which is relatively hard at a temperature of the order of -5° C to -7° C, is extruded vertically from a nozzle near to the exit from a freezer and then cut into sections or slabs and taken over by a plate conveyor, a stick is inserted laterally and the sticked slab is hardened in a freezer tunel for retaining its shape. The stick bar is then coated with a chocolate coating.

Extrusion gives the product a fine, less crystallized texture than that of moulded products. The fine texture obtained by extrusion is largely due to the freezing conditions in a freezer and, in particular to the freezing temperature at the exit from the freezer. That is to say, the lower the temperature, fewer large crystals are formed. This means that the faster the freezing, the smaller the ice crystals and the finer the texture. In a freezer, freezing speed is at maximum thanks to mixing and to the continual scraping of the wall of the freezer barrel which allows accelerated freezing of the water.

An example of what is possible to achieve by extrusion is shown e.g. in US-A-4 542 028 which discloses composite ice cream cakes consisting of a plurality of superimposed thin ice cream layers interleaved with thin chocolate layers. In one embodiment the ice cream layers are not flat and are laid down in as an overlapping multiplicity of thin layers which form attractive decorative waves by adjusting the relative speeds of the ice cream extrudates and of the undelaying conveyor. The composite frozen confection thus extruded can then be cut into portions transversally to the multilayered strand.

In US-A-6 284 294 a patterned composite frozen confection as a stick bar is disclosed which comprises multiple thin patterns of an inclusion material of texture different from that of the ice cream in a variety of well controlled shapes and orientation by extrusion.

A drawback of the extrusion method is that the shape of the extruded products is limited.

The freezing of a liquid composition to be frozen by means of moulding through simple thermal conduction in a mould immersed in a refrigerating solution is slower and leads to the formation of considerably larger crystals. In this process, the composition to be frozen is metered out in the liquid state into moulds with a view to guaranteeing satisfactory filling and to preventing the creation of air pockets, and this temperature is in the order of -2° C to -3° C. The proportion of frozen water is low and most of the process of freezing the product takes place in the moulds in a quiescent way. This explains the presence of a coarser texture, owing to an increase in the size of the crystals which have an elongated shape. Moreover, this technique is unable to produce shapes other than the shape of the mould itself.

There is a demand to provide frozen stick bars of new shapes and textures. The range of shapes and textures accessible to the known techniques is limited and it is the object of the invention to provide products of novel and funny shape and texture.

We have surprisingly found it possible to prepare a frozen stick bar in the form of a ribbon of ice confection showing a multiplicity of waves by moulding.

### Summary of the invention

The invention relates to a method for manufacturing a moulded ice confectionery article which comprises:
providing an open ended mould of generally parallelepiped shape,
filling the mould with a metered amount of ice confectionery at a temperature of from -5° C to -7° C from the bottom up to the top of the mould, by extrusion from a slot nozzle adapted to the mould dimensions, said nozzle moving down in the mould for filling and having a bottom up motion during filling,
wherein the extrusion rate at the nozzle is greater than the speed of the upward motion of the nozzle during filling,
and the upward motion of the nozzle is accelerated at the end of filling,
cooling the mould for hardening the ice cream ribbon,
inserting a stick and demoulding.

### Detailed description of the invention

In the context of the invention, "frozen confection" means ice cream, sorbet, sherbet or water ice with an overrun of 20 to 120 % by volume.

The frozen confection may contain small inclusions, preferably of a size of at most 2mm. The frozen confection may contain various sauces, such as for example chocolate, fruit syrup which may be coextruded thus providing an attractive visual ripple aspect to the frozen confection.

In one embodiment, the method of the invention invention is carried out by preparing a frozen confectionery composition including at least about 50 weight percent water in a solidifying environment and applying a pressure thereto to facilitate transport of the composition, continuously feeding the frozen confectionery composition at a sufficient temperature and pressure to transport it from the solidifying environment into a rotative distributor, delivering the pressurized frozen confectionery composition from the rotative distributor in substantially equal amounts to a plurality of paths, providing an amount of frozen confectionery composition sufficient to fill a mould on each path using a slidable nozzle, and discharging the sufficient amount of the frozen confectionery composition under a pressure greater than atmospheric pressure and under frozen conditions from the slidable nozzle into the mould to provide the molded ice confectionery article.

In one embodiment, the pressure is sufficient to transport the composition from the solidifying environment into each mould at a pressure of about 1.5 to 2 bar when the composition is discharged into each mould. In another embodiment, the feeding of the composition into the rotative distributor is at a pressure of about 4 bar or below. Preferably, the sufficient pressure for transporting is entirely provided by a freezer pump that also cools the frozen ice confectionery composition to a temperature of about -5°C to -7°C. In another embodiment, the nozzle pipes slide so that each descends into a corresponding mould at the start of filling, rises during filling, and re-emerges from the mould at the end of filling. Optionally, but preferably, the opening of the nozzle is sufficiently narrow to allow the frozen confectionery material to be fluidified by means of shearing.

In another embodiment of the invention, the dosing system can include a dynamic distributor and a bottom-up feeder to provide molded frozen confectionery products having the smooth texture of a frozen extruded products. Various features noted above can be included or substituted for the specifics of the embodiment discussed below.

In this preferred embodiment, the dosing system can be composed of one or more types of metering devices that facilitate proper filling of the molds with ice confectionery material at a temperature of about -5°C to about -7 °C. At this temperature, the ice confectionery material is typically stiff (i.e., viscous), but still flowable, although this can vary on such factors as the ingredients and the overrun. Due to the ice stiffness, i.e., relatively higher viscosity compared to a liquid and more readily flowable material, it is possible to form within the generally parallelepiped mould a ribbon of ice confectionery which is folded over itself without entirely filling the mould, thus leaving voids between the waves.

Ice crystal sizes according to this embodiment are smaller than conventional ice moldings. This is accomplished by freezing the ice confectionery material before deposition into a mould, which "pre-freezing" permits additional control in minimizing ice crystal size. By forming ice crystals of a suitably small size via such a pre-freezing before moulding, a smoother, less icy texture can be obtained. The average ice crystal diameter of this embodiment is less than about 60 µm, preferably less than about 40 µm to provide the smooth texture of the invention. Various levels of overrun can be used if desired in forming a frozen ice confectionery article of the invention, but a particularly preferred overrun, especially for ice creams, is approximately 20 to 100 percent. The frozen confectionery articles resulting from this invention and this embodiment are substantially free, or entirely free, of dendrites, which are dendritic crystals that are big and elongated and adversely affect the product texture and consumer perception thereof.

The freezer barrel typically delivers the ice at about -5°C to -7°C, preferably about -5.5°C to -6.5°C, more preferably at about -6°C, which temperatures are sufficient low to permit suitably small ice crystal formation as previously discussed. The ice is typically pushed by the freezer pump at a pressure of about 5 to 9 bars, preferably about 6 to 8 bars, to a distributor. The freezer pump delivers the frozen confectionery material at this pressure to overcome the typical pressure losses due to the ice friction in the pipe feeding line, *i.e.,* ice friction arising from small ice particles that have formed within the flowable frozen confectionery material.

The distributor is preferably a rotative distributor that includes a rotor to distribute at least a substantially uniform, preferably uniform, flow of ice to a plurality of flexible pipes. In preferred embodiments, the base of the rotor is conical and the rotor has from about 10 to 24 openings, preferably from about 14 to 20 openings. The openings have a diameter of about 2 mm to 10 mm, and preferably from about 4 mm to 8 mm. An exemplary rotative valve can have 16 openings each of 6 mm diameter. There can typically be anywhere from 2 pipes to 50 pipes or more, although preferably there might be from approximately 5 to 20 flexible pipes. There is typically a plurality of notches at the periphery of the base of the rotative valve. Although the number of notches need not correspond, there can be one notch for each flexible pipe, so when 20 flexible pipes are used there could be 20 notches in the valve to ensure proper distribution. The flexible pipes can be made of any suitable material that retains its flexibility and is unlikely to crack or break under low temperature operation. The role of the rotor is to distribute at least substantially the same amount of flow, preferably the same amount of flow, to each flexible pipe for deposition in the mould. For example, "substantially the same amount" can mean there is less than about a 10 volume percent difference, preferably less than about a 5 volume percent difference, and more preferably less than about a 1 volume percent difference, between any two flexible pipes over a given period of time. This minimizes or avoids the creation of preferential flow to one pipe at the expense of another. For instance, if there is stagnation somewhere, the motion of the slidable filler helps accelerate the flow from place to place to minimize or avoid this stagnation. The rotor can have a variable speed that is sufficiently suitable to ensure proper distribution of the frozen ice confectionery material into the flexible pipes.

In an other embodiment, the rotative distributor may be replaced by a filling system comprising a sealed hopper which is maintained under pressure, e.g. by way of a pressurized gas. The hopper may comprise a rotary agitator/distributor for distributing the ice confectionery composition homogeneously between the various exit pipes.

The flexible pipes are connected to a slidable filler. The filler is made of a housing with a rotating valve inside. At the base of the housing, fittings typically admit an equivalent number of nozzle pipes adapted to the mould dimensions. These nozzle pipes are significantly narrower than the moulds and are lowered into the moulds before frozen confectionery material is deposited. The filler housing can optionally, but preferably, include a collector for bypass and/or recycling when the quantity of frozen confectionery material is not exactly that needed to fill the moulds, or for cleaning, or both. The housing can also present other fittings (not represented) for a second frozen confectionery material, a sauce that can be provided as a topping, a filling, or both, or a combination of additional materials desired to be moulded with the frozen confectionery material. This can advantageously add one or more swirl or other visible patterns into the ice confectionery material, such as when a second different color material is used, to provide a visually appealing swirled or patterned ice confectionery article. The filler is moved with a mechanical system typically made of 2 racks and 2 gearwheels of any suitable configuration and size. The motion profile of the wheels is adapted to the dosing conditions and the pre-set pattern desired for deposition in the molds. Particularly, the frozen ice confectionery material is pushed by the freezer or other pump, when the valve is opened, at a speed sufficiently slow to avoid over dosing during the up motion of the nozzle pipes.

In operation, the nozzle pipes of the filler are moved down in the moulds and the rotating valve is open to let frozen ice confectionery material flow to the bottom of the moulds. Then the nozzle pipes are moved up over the course of a set time to fill the mould. For example, the nozzle pipes can be held at the bottom of the moulds, or within about 10 percent of the distance from the bottom to the top of the mould, and the moulds filled to the top. Then the nozzle pipes can be withdrawn slowly while additional material is added to fill the space the nozzle pipes previously occupied. Another example of a nozzle motion would be to slowly raise the nozzle pipes from bottom to top as soon as the mould filling begins. The motion instructions of the filler come from dedicated software that is called Program Logic Control ("PLC"). The coordination is adjusted and controlled by the way of the servo-drive motor and the PLC system. Thus, the speed of this electric motor can be controlled electronically at each fraction of second to ensure the filler moves in the desired motion pattern to provide a desired pattern in the resultant frozen confectionery article. At the end of the dosing, the motion can be accelerated to avoid a tail extension, which is a well known and undesired stretching of the final material flowing out of a nozzle, pipe or the like when the material is greater than a certain viscosity or stickiness. A rapid motion can minimize or avoid tailing.

The motion of the filler itself is typically controlled entirely with the servo-driven motor with a specific motion profile, or kinematic, which is provided from dedicated program logic control software. Suitable motion profiles can be preprogrammed to provide a tri-dimensional shape to products in combination with the speed control.

The PLC is used to open the time elapse rotative valve at the same time the nozzle pipes reach the lowest position of the slidable filler assembly. Any suitable mechanism can be used to open the valve including activation of a sensor, such as at the tip of the nozzle pipes or a toggle switch on the slidable filler itself. The speed of the motor in raising the slidable filler is adjusted by varying the current in the motor in correspondence with the frozen confectionery material filling flow in the mould. The valve is then closed after a defined time, i.e., based on a preprogrammed setting, that corresponds to a course the slidable filler takes and/or to a leveling off of the filling at the top of the mould. Preferably, a rapid acceleration of the motor allows the nozzle pipes to be rapidly freed from the moulds while minimizing undesirable tailing.

The moulded products can be, and preferably are, coated in a chocolate coating to provide a visually attractive product. The chocolate or other suitable coating, i.e. "compound coating" or other water-based coating is added after the frozen confectionery product is moulded and demoulded and can be provided by spraying, dipping, or enrobing. The said coating may also contain small additions, such as for example small fruit, sugar confectionery granules or cereal pieces. The combination of the program logic control software and the servo-drive motion readily permits such products to be made in reproducible fashion to provide uniformity where desired and to minimize the excess use of raw materials and energy.

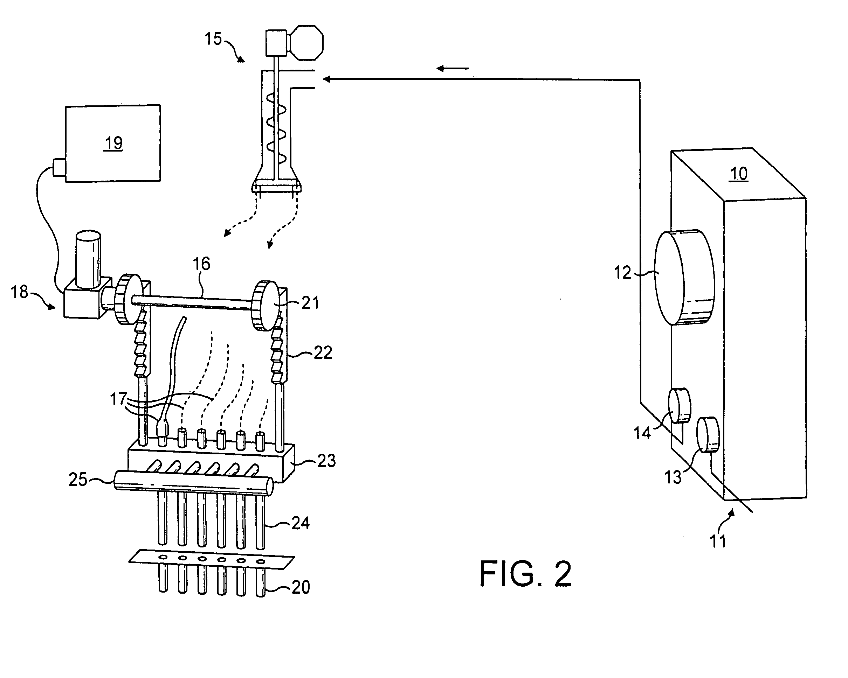

Figure 2 depicts a schematic of an embodiment of the process of the invention, where a continuous freezer 10 accepts a flowable confectionery material 11 and freezes it in continuous fashion. The freezer 10 includes at least one barrel 12 to freeze, mix, and transport the frozen ice confectionery material that arrives at inlet 13 and exits the freezer 10 at outlet 14. As depicted, there is a mix pump 13 and an ice pump 14 to transport the confectionery material through the apparatus and into the moulds at a pressure greater than atmospheric / ambient pressure, whichever is higher. The freezer 10 is connected, preferably directly as shown, to a rotative distributor 15 that facilitates distribution of equal amounts of frozen ice confectionery material into each track of a slidable filler 16. The rotative distributor 15 is connected, preferably directly as depicted, to the slidable filler 16 with a plurality of flexible pipes or tubes 17.

The slidable filler 15 includes a motor 18, such as a servo-drive motor, associated with a programmable control logic chip or other programmable device 19 to facilitate control of the discharge of frozen confectionery material into the molds 20. For example, a gear wheel 21 and corresponding rack 22 can be used as depicted to facilitate sliding of the filler toward and away from the moulds 20. The slidable filler 16 includes a casing having a time elapse rotative valve 23 therein. The rotative valve 23 is disposed in between the connection of each flexible pipe 17 to a corresponding nozzle pipe 24. A collector for recycling 25 is optionally included on or associated with the casing holding the rotative valve 23. The slidable filler 16 also includes a mechanism to slidably move the entire assembly of the flexible pipes 17, casing including rotative valve 23, and nozzle pipes 24. This advantageously permits the moulds to be filled from the bottom-up.

The term "about," as used herein, should generally be understood to refer to both numbers in a range of numerals. Moreover, all numerical ranges herein should be understood to include each whole integer within the range.

### Example

The following non-limiting example is merely illustrative of one exemplary embodiment of the invention described herein. Parts are by weight unless specified otherwise.

### Example 1: Formation of a Frozen Ice Cream Product According to the Invention

An ice cream of 38 % dry content by weight, of 90 % overrun at a temperature of -6° C is dosed in moulds progressing at a pace of 20 strokes/min. The shape of the moulds is generally parallelepipedic (*e*.*g*., flat and tapered toward the bottom ) of 130 mm height, 55 mm width and 22 mm thickness, having a nominal volume of 80 ml when filled up to within 15 mm of the upper rim. At the time the signal of filling is given, the moulds are stationary. The filling slot nozzles have the following dimensions, length 87 mm, internal width 16 mm, thickness 5 mm. The nozzles descend into the moulds in 0.2 s and stop 1.5 cm from the bottom. After a delay of 0.15 s with respect to the signal, the time lapse rotary valve opens and the ice cream flows down at an output of 22 ml/s. The rotary valve remains open for approximately 1.8 s and the mould is filled within approximately 2.5 s. The compression and expansion phenomena can be disregarded since pressure tends to ambient in the mould at the level of the nozzles and the ice cream is rather thick. The ice cream arrives at the mould at a speed of about 25 cm/s. The parallelepipedic mould is filled within approximately 2.5 s. The height of the molded product is 100 mm and is filled at a speed of about 5 cm/s.

Under the motion pattern described above for filling these moulds, the nozzles rise respectively faster than the freezer flow. Therefore, the upward speed of the nozzles is an important parameter to ensure that the nozzle speed is substantially the greater than the flow of frozen ice confectionery material. At the end of filling, the nozzles exit the molds at a faster speed of 85 cm/s in order to break the thread of ice cream without forming a "tail."

All the above parameters according to the control modes are entered into a control program, i.e., the PLC. The controlling options by nozzle position, timing, and speed vary according to the control modes in order to be able to select the easiest control mode. The parameters are recorded according to a given product formulation, such as the components and exact temperature, and a given type and shape of mold.

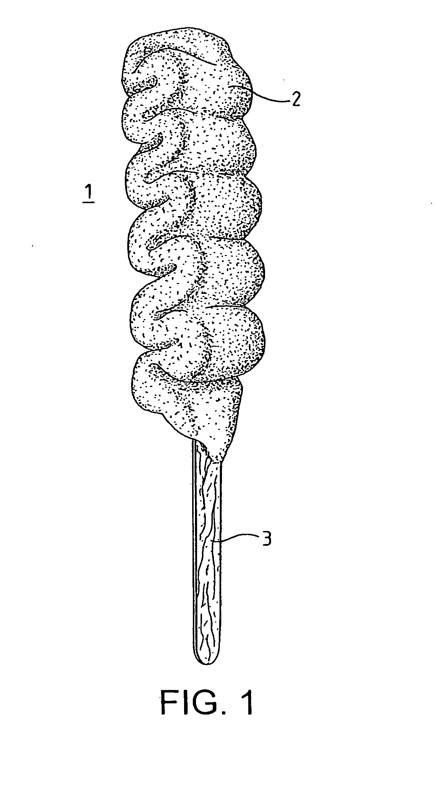

As shown in Figure 1, the product 1 is a stick bar with a core of the shape of an accordion, i.e. a ribbon which is folded over itself and comprises 5 or 6 waves 2 (depending from which side it is viewed) and a stick 3. The product may be coated with a chocolate or compound coating (not represented) or other water-based coating.

Although preferred embodiments of the invention have been described in the foregoing description, it will be understood that the invention is not limited to the specific embodiments disclosed herein but is capable of numerous modifications by one of ordinary skill in the art. It will be understood that the materials used and the mechanical details may be slightly different or modified from the descriptions herein without departing from the methods and compositions disclosed and taught by the present invention.

## Claims

1. A method for manufacturing a moulded ice confectionery article which comprises:
providing an open ended mould of generally parallelepiped shape,
filling the mould with a metered amount of ice confectionery at a temperature of from - 5° C to - 7° C from the bottom up to the top of the mould, by extrusion from a slot nozzle adapted to the mould dimensions, said nozzle moving down in the mould for filling and having a bottom up motion during filling,
wherein the extrusion rate at the nozzle is greater than the speed of the upward motion of the nozzle during filling,
and the upward motion of the nozzle is accelerated at the end of filling,
cooling the mould for hardening the ice cream ribbon,
inserting a stick and demoulding.

2. A method according to claim 1 comprising:
preparing a frozen ice confectionery composition comprising at least about 50 weight percent water in a solidifying environment and applying a pressure thereto to facilitate transport of the composition;
continuously feeding the frozen ice confectionery composition at a sufficient temperature and pressure to transport it from the solidifying environment into a rotative distributor;
delivering the pressurized frozen ice confectionery composition from the rotative distributor in substantially equal amounts to a plurality of paths;
providing an amount of frozen ice confectionery composition sufficient to fill a mold on each path using a slidable nozzle; and
discharging the sufficient amount of the frozen confectionery composition under a pressure greater than atmospheric pressure and under frozen conditions from the slidable nozzle into the mold to provide the molded ice confectionery article of a desired tri-dimensional pattern.

3. The method of claim 2, wherein the rotative distributor is directly connected to the freezer via a pressurized pipe.

4. The method of claim 2, wherein the rotative distributor meters substantially the same amount of frozen confectionery material into each flexible pipe.

5. The method of claim 2 wherein the gauge pressure on the frozen confectionery material just after exiting the freezer is about 6 bar to 8 bar.

6. The method of claim 2 wherein the gauge pressure on the frozen confectionery material at the time elapse rotative valve is about 1.5 bar to 4 bar.

7. The method of claim 2 wherein the pressure is sufficient to transport the composition from the solidifying environment into each mold at a pressure of about 1.5 to 2 bar when the composition is discharged into each mold and wherein the sufficient amount of frozen confectionery material provided is determined by a flow rate of the frozen confectionery material and a length of time the flow occurs.

8. The method of claim 2, wherein the feeding of the composition into the rotative distributor is at a pressure of about 4 bar or below.

9. The method of claim 1, which comprises coating the demoulded core with a chocolate or compound coating or water-based coating by enrobing, spraying or dipping.

## Patentansprüche

1. Verfahren zur Herstellung eines geformten Eis-Süßwarenartikels, das umfasst:
Bereitstellen einer offenendigen Form mit im Wesentlichen Parallelepiped-Form,
Füllen der Form mit einer abgemessenen Menge einer Eis-Süßware einer Temperatur von -5 bis -7 °C vom Boden zur Oberseite der Form durch Extrusion aus einer Schlitzdüse, die den Formdimensionen angepasst ist, wobei sich die Düse zum Füllen in die Form nach unten bewegt und während des Füllens eine Bewegung vom Boden nach oben ausführt, wobei die Extrusionsgeschwindigkeit der Düse größer ist als die Geschwindigkeit der aufwärts gerichteten Bewegung der Düse während des Füllens,
und wobei die aufwärts gerichtete Bewegung der Düse am Ende des Füllens beschleunigt wird,
Abkühlen der Form zum Härten des Eiscremebandes,
Einschieben eines Stiels und Entformen.

2. Verfahren nach Anspruch 1, das umfasst:
Herstellen einer Zusammensetzung einer gefrorenen Eissüßware, die wenigstens etwa 50 Gew.-% Wasser umfasst, in einer Verfestigungsumgebung und Ausüben eines Drucks darauf, um den Transport der Zusammensetzung zu erleichtern;
kontinuierliches Einspeisen der gefrorenen Eis-Süßwarenzusammensetzung bei einer ausreichenden Temperatur und einem ausreichenden Druck, um sie von der Verfestigungsumgebung in einen Drehverteiler zu transportieren;
Abgeben der unter Druck stehenden gefrorenen Eis-Süßwarenzusammensetzung aus dem Drehverteiler in im Wesentlichen gleichen Mengen an eine Vielzahl von Pfaden;
Bereitstellen einer Menge einer gefrorenen Eis-Süßwarenzusammensetzung, die ausreicht, eine Form zu füllen, in jeden der Pfade unter Verwendung einer Gleitdüse; und
Abgeben der ausreichenden Menge der gefrorenen Süßwarenzusammensetzung unter einem Druck, der größer ist als Atmosphärendruck und unter Gefrierbedingungen aus der Gleitdüse in die Form, um den geformten Eis-Süßwarenartikel in einem erwünschten dreidimensionalen Muster zu erhalten.

3. Verfahren nach Anspruch 2, wobei der Drehverteiler über ein druckbeaufschlagtes Rohr direkt mit dem Gefrierer verbunden ist.

4. Verfahren nach Anspruch 2, wobei der Drehverteiler im Wesentlichen die gleiche Menge an gefrorenem Süßwarenmaterial in jedes flexible Rohr abmisst.

5. Verfahren nach Anspruch 2, wobei der Überdruck auf das gefrorene Süßwarenmaterial direkt nach dem Austritt aus dem Gefrierer etwa 6 bar bis 8 bar beträgt.

6. Verfahren nach Anspruch 2, wobei der Überdruck auf das gefrorene Süßwarenmaterial an dem Zeitablauf-Drehventil etwa 1,5 bar bis 4 bar beträgt.

7. Verfahren nach Anspruch 2, wobei der Druck ausreicht, die Zusammensetzung aus der Verfestigungsumgebung in jede Form bei einem Druck von etwa 1,5 bis 2 bar zu transportieren, wenn die Zusammensetzung in jede Form abgegeben wird, und wobei die bereitgestellte ausreichende Menge an gefrorenem Süßwarenmaterial bestimmt wird durch eine Strömungsgeschwindigkeit des gefrorenen Süßwarenmaterials sowie einen Zeitraum, den die Strömung andauert.

8. Verfahren nach Anspruch 2, wobei das Einspeisen der Zusammensetzung in den Drehverteiler bei einem Druck von etwa 4 bar oder darunter erfolgt.

9. Verfahren nach Anspruch 1, das das Überziehen des Kerns nach dem Entformen mit einem Schokoladen- oder Fettglasurüberzug oder einem Überzug auf Wasserbasis durch Umhüllen, Aufsprühen oder Eintauchen umfasst.

## Revendications

1. Procédé pour la production d'un article de confiserie du type glace moulée, qui comprend les étapes consistant
à fournir un moule à extrémité ouverte ayant une forme généralement parallélépipédique,
à remplir le moule avec une quantité dosée de produit de confiserie du type glace à une température de -5°C à -7°C par le fond jusqu'à la partie supérieure du moule, par extrusion à partir d'une buse à fente adaptée aux dimensions du moule, ladite buse se déplaçant vers le bas dans le moule pour le remplissage et ayant un mouvement de bas en haut au cours du remplissage,
la vitesse d'extrusion au niveau de la buse étant supérieure à la vitesse du mouvement ascendant de la buse au cours du remplissage,
et le mouvement ascendant de la buse étant accéléré à la fin du remplissage,
à refroidir le moule pour faire durcir le ruban de crème glacée,
à insérer un bâtonnet et à démouler.

2. Procédé suivant la revendication 1, comprenant les étapes consistant :
à préparer une composition de confiserie du type glace congelée comprenant au moins environ 50 % en poids d'eau dans un environnement solidifié et à appliquer une pression à celle-ci pour faciliter le transport de la composition ;
à introduire de manière continue la composition de confiserie du type glace congelée à une température et une pression suffisantes pour son transport de l'environnement de solidification vers un distributeur rotatif ;
à délivrer la composition de confiserie du type glace congelée mise sous pression à partir du distributeur rotatif en des quantités substantiellement égales à une pluralité de trajets ;
à fournir une quantité de composition de confiserie du type glace congelée suffisante pour remplir un moule sur chaque trajet en utilisant une buse coulissante ; et
à décharger la quantité suffisante de la composition de confiserie congelée sous une pression supérieure à la pression atmosphérique et dans des conditions d'état congelé de la buse coulissante dans le moule pour fournir l'article de confiserie du type glace moulé en un motif tridimensionnel désiré.

3. Procédé suivant la revendication 2, dans lequel le distributeur rotatif est connecté directement à l'appareil de congélation par un conduit mis sous pression.

4. Procédé suivant la revendication 2, dans lequel le distributeur rotatif effectue le dosage substantiellement de la même quantité de substance de confiserie congelée dans chaque conduit flexible.

5. Procédé suivant la revendication 2, dans lequel la pression manométrique sur la substance de confiserie congelée juste après sa sortie de l'appareil de congélation est d'environ 6 bars à 8 bars.

6. Procédé suivant la revendication 2, dans lequel la pression manométrique sur la substance de confiserie congelée au niveau de la vanne rotative à fonctionnement temporisé est d'environ 1,5 bar à 4 bars.

7. Procédé suivant la revendication 2, dans lequel la pression est suffisante pour transporter la composition de l'environnement de solidification dans chaque moule à une pression d'environ 1,5 à 2 bars lorsque la composition est déchargée dans chaque moule et dans lequel la quantité suffisante de substance de confiserie congelée fournie est déterminée par un débit de la substance de confiserie congelée et le temps pendant lequel l'écoulement se produit.

8. Procédé suivant la revendication 2, dans lequel la distribution de la composition dans le distributeur rotatif est effectuée à une pression approximativement égale ou inférieure à 4 bars.

9. Procédé suivant la revendication 1, qui comprend l'enrobage du noyau démoulé avec un enrobage de chocolat ou enrobage composé ou un enrobage aqueux par enrobage, pulvérisation ou trempage.
